# EUROPÄISCHE PATENTSCHRIFT

(11) **EP 2 881 264 B1**
(45) Veröffentlichungstag und Bekanntmachung des Hinweises auf die Patenterteilung: **27.02.2019**
(21) Anmeldenummer: 14184872.1
(22) Anmeldetag: 16.09.2014
(51) Int. Cl.: B60C 11/03, B60C 11/12

(54) **Fahrzeugluftreifen**
Pneumatic tyres for a vehicle
Pneumatiques de véhicule

(30) Priorität: 09.12.2013 DE 102013225303
(43) Veröffentlichungstag der Anmeldung: 10.06.2015
(73) Patentinhaber: Continental Reifen Deutschland GmbH, 30165 Hannover (DE)
(72) Erfinder: Diensthuber, Franz, 30559 Hannover (DE); Brandau, Christian, 30419 Hannover (DE)
(74) Vertreter: Finger, Karsten

(56) Entgegenhaltungen:
- WO-A1-2011/111319
- JP-A- 2007 153 056
- JP-A- 2009 067 344
- US-A1- 2013 206 295

## Beschreibung

Die Erfindung betrifft einen Fahrzeugluftreifen, insbesondere für den Einsatz unter winterlichen Fahrbedingungen, mit einem Laufstreifen, welcher, auf das Fahrzeug bezogen, asymmetrisch ausgeführt ist und einen Außenbereich und einen Innenbereich sowie einen im Bereich der Reifenäquatorialebene verlaufenden, mittleren Bereich aufweist, wobei der Laufstreifen in sämtlichen Teilbereichen Profilblöcke und/oder blockartige Profilpositive, die jeweils mit einer Vielzahl von Einschnitten versehen sind, aufweist, welche seichte Randabschnitte und jeweils einen tiefen Mittelabschnitt aufweisen, wobei der Laufstreifen im Außen- und im Innenbereich schulterseitig jeweils eine Blockreihe besitzt, wobei an die schulterseitige Blockreihe im Außenbereich eine Blockreihe anschließt, deren Blöcke im Wesentlichen parallellogrammförmig gestaltet sind und von Querrillen gebildete Querkanten aufweisen, die unter einem spitzen Winkel von 15 ° bis 35 ° zur Querrichtung orientiert sind, wobei die Einschnitte in den Profilblöcken dieser Blockreihe zu den Querkanten gegengewinkelt verlaufen,
wobei an die schulterseitige Blockreihe im Innenbereich eine Umfangsrille angrenzt, von welcher parallel zueinander bis über die Reifenäquatorialebene verlaufende Schrägrillen ausgehen.

Für den Einsatz unter winterlichen Fahrbedingungen geeignete Fahrzeugluftreifen sind in unterschiedlichen Ausführungsvarianten bekannt. So ist beispielsweise ein Fahrzeugluftreifen mit einem Laufstreifen eingangs genannter Art aus der EP 2 353 884 A1 bekannt. Dieser Laufstreifen ist asymmetrisch gestaltet und weist im Innenbereich und im Außenbereich unterschiedliche Profilstrukturen auf. Im Innenbereich des Laufstreifens ist die schulterseitige Blockreihe derart ausgeführt, dass sie eine um mindestens 10 % geringere Quersteifigkeit und eine um mindestens 15 % größere Umfangssteifigkeit besitzt als die schulterseitige Blockreihe im Außenbereich. Ein mit einem derartigen Laufstreifen versehener Reifen soll vor allem Kurvenfahrten im Grenzbereich ermöglichen und ein hohes Reaktionsvermögen auf Lenkbewegungen sicherstellen. Der Außenbereich dieses bekannten Laufstreifens weist durch die gegengewinkelte Anordnung der Einschnitte in der neben der schulterseitigen Blockreihe angeordneten Blockreihe eine vergleichsweise hohe Umfangssteifigkeit und Quersteifigkeit auf, was für ein gutes Trockenhandling des Reifens von Vorteil ist. Die im mittleren Bereich des Laufstreifens und in einem Teilbereich des Innenbereichs angeordneten Profilpositive weisen Einschnitte auf, die ebenfalls zu den Querkanten der Profilpositive gegengewinkelt verlaufen. Die Einschnitte versteifen daher auch den Innenbereich des Laufstreifens, was für die Schneegriffeigenschaften von Nachteil ist.

Ein weiterer Fahrzeugluftreifen mit einem asymmetrisch gestalteten Laufstreifen ist aus der JP 2007 153056 A bekannt. Im zentralen Bereich des Laufstreifens ist eine in Umfangsrichtung durchgehende Profilrippe vorgesehen, die mit einer Vielzahl von sich in axialer Richtung erstreckenden Einschnitten versehen ist. Im Außenbereich und im Innenbereich des Laufstreifens verlaufen jeweils zwei Profilblockreihen, die durch in Umfangsrichtung umlaufende Umfangsrillen voneinander und von der im zentralen Bereich verlaufenden Profilrippe getrennt sind. Nachdem die Profilblöcke dieser Blockreihen durch in axialer Richtung verlaufende Querrillen voneinander getrennt sind, verlaufen auch die Querkanten in axialer Richtung. Die an die schulterseitige Blockreihe laufstreifeninnenseitig anschließende Blockreihe im Außenbereich ist mit parallel zueinander verlaufenden Einschnitten versehen, welche sich unter einem Winkel von etwa 45° zur Umfangsrichtung und gleichsinnig zu den Querkanten der Profilblöcke erstrecken.

Aus der JP 2009 067344 A und der WO 2011/111319 A1 sind Fahrzeugluftreifen mit asymmetrisch gestalteten Laufstreifen bekannt, welche durch gerade in Umfangsrichtung umlaufende Umfangsrillen und durch Querrillen gebildete Profilstrukturen, insbesondere Profilblockreihen und/oder Profilrippen, aufweisen, die jeweils mit einer Anzahl von Einschnitten versehen sind. Eine Zuordnung der Profilstrukturen zu Außen-oder Innenbereich ist nicht getroffen. Bei dem aus der JP 2009 067344 A bekannten Laufstreifen ist zumindest eine der Umfangsrillen besonders breit ausgeführt und weist eine separate in Umfangsrichtung umlaufende Rille an ihrem Rillengrund auf. Bei dem aus der WO 2011/111319 A1 bekannten Laufstreifen erstrecken sich die in den Profilpositiven im zentralen Bereich angeordneten Einschnitte in axialer Richtung. Zumindest ein Drittel der in diesem Bereich angeordneten Einschnitte weist eine größere Breite auf als die Einschnitte in den breiteren Profilblöcken. Bei dem aus der US 2013/206295 A1 bekannten Fahrzeugluftreifen sind im Außenbereich Profilstrukturen, insbesondere Profilblöcke, angeordnet, welche mit parallel zueinander verlaufenden, bezüglich der axialen Richtung in sämtlichen Profilstrukturen gleichsinnig geneigten Einschnitten versehen sind. Im Innenbereich sind Profilblöcke vorgesehen, deren jeweils parallel zueinander verlaufenden Einschnitte in einigen Profilblöcken gegensinnig zu den Einschnitten im Außenbereich und in anderen Profilblöcken gleichsinnig zu den Einschnitten im Außenbereich geneigt verlaufen.

Der Erfindung liegt die Aufgabe zugrunde, einen Reifen bzw. Laufstreifen eingangs genannter Art hinsichtlich des Schneegriffpotentials zu verbessern.

Gelöst wird die gestellte Aufgabe erfindungsgemäß dadurch, dass im mittleren Bereich und im Innenbereich Profilblöcke und/oder blockartige Profilpositive vorgesehen sind, die unter einem Winkel von 15 ° bis zu 35 ° orientierte Querkanten aufweisen, zu welchen sich die in diesen Profilblöcken und/oder blockartigen Profilpositiven verlaufenden die Einschnitte parallel erstrecken, wobei sich die Einschnitte in den Profilblöcken der Blockreihe im Außenbereich unter einem Winkel von 25 ° bis 45 ° zu den Querkanten erstrecken.

Die blockartigen Profilpositive und/oder die Profilblöcke im mittleren Bereich und in zumindest einem Teil des Innenbereichs des Laufstreifens sind sowohl in Umfangsrichtung als auch in Querrichtung weicher als die Profilblöcke mit gegengewinkelten Einschnitten im Außenbereich. Dies ist vor allem auf die parallele Anordnung der Einschnitte zu den Querkanten zurückzuführen. Die Einschnitte können sich daher beim Abrollen des Reifens auf schneeigem Untergrund zur Bildung von Griffkanten gut öffnen. Durch die Wahl der Größe des Winkels Einschnitte in den Profilblöcken der Blockreihe im Außenbereich zu den Querkanten lässt sich auf die Umfangs- und die Quersteifigkeit der Profilblöcke in dieser Blockreihe gezielt Einfluss nehmen.

Bei einer bevorzugten Ausführungsform der Erfindung sind die blockartigen Profilpositive und/oder die Profilblöcke im Innenbereich und im mittleren Bereich des Laufstreifens durch gegensinnig zueinander geneigt verlaufende Schrägrillen gebildet. Die Schrägrillen stellen daher zusätzliche Griffkanten zur Verfügung, die vor allem bei Kurvenfahrt ihre Wirkung entfalten.

Durch die Wahl der Größe dieses Winkels lässt sich auf die Umfangs- und die Quersteifigkeit der Profilblöcke in dieser Blockreihe gezielt Einfluss nehmen.

Um die Profilblöcke in der Blockreihe im Außenbereich mit einer relativ hohen Umfangssteifigkeit und Quersteifigkeit ausführen zu können, ist es vorteilhaft, wenn der Außenbereich eine Breite aufweist, die 30 % bis 40 % der Breite der Bodenaufstandsfläche des Laufstreifens beträgt.

Weitere Merkmale, Vorteile und Einzelheiten der Erfindung werden nun anhand der Zeichnung, die Ausführungsbeispiele darstellt, näher beschrieben. Dabei zeigen
Fig. 1 und Fig. 2 jeweils schematisch Draufsichten eines Profilblockes eines Laufstreifens eines Fahrzeugluftreifens und
Fig. 3 eine Draufsicht auf eine Teilabwicklung eines Laufstreifens eines Fahrzeugluftreifens mit erfindungsgemäß ausgeführten Profilblöcken bzw. blockartigen Profilpositiven.

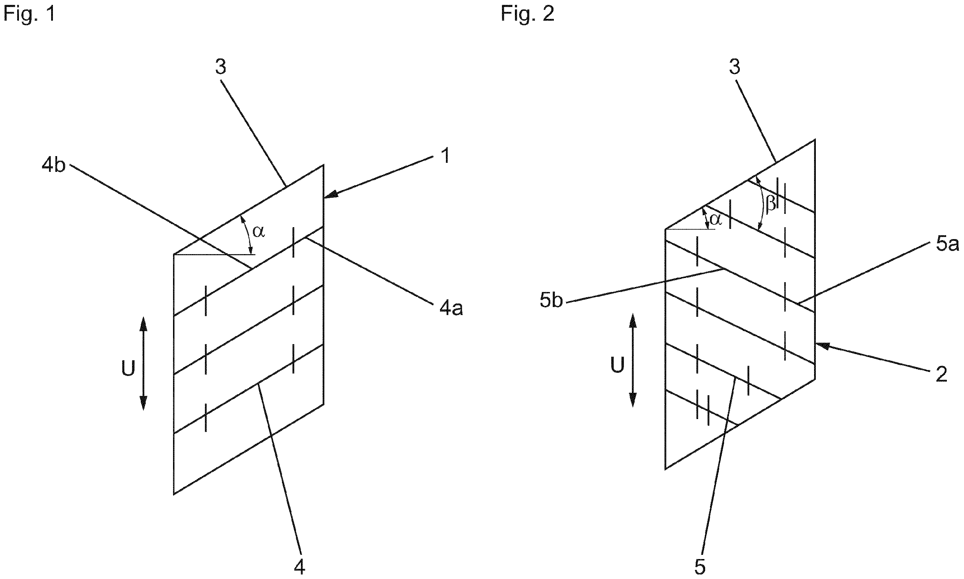

Fig. 1 und Fig. 2 zeigen Draufsichten auf jeweils einen der Einfachheit halber parallelogrammförmigen Profilblock 1, 2. Die Doppelpfeile U bei den beiden Figuren kennzeichnet die Umfangsrichtung des Laufstreifens. Die Profilblöcke 1, 2 können im Laufstreifen innerhalb von Profilblockreihen angeordnet sein und von in Umfangsrichtung umlaufenden, nicht dargestellten Umfangsrillen und von nicht dargestellten Quer- bzw.

Schrägrillen begrenzt sein. Bei der in den Figuren 1 und 2 gezeigten Ausführungsform weist jeder der gezeigten Profilblöcke 1, 2 zwei in Umfangsrichtung orientierte Blockkanten und zwei gegenüber der Querrichtung unter einem spitzen Winkel α, welcher 15 ° bis 35 ° beträgt, geneigte Querkanten 3 auf, jeder Block 1, 2 ist mit einer Vielzahl von Einschnitten 4, 5 versehen, die eine Breite von 0,4 mm bis 0,6 mm aufweisen und hier der Einfachheit halber als gerade verlaufende Einschnitte dargestellt sind. Die drei im Profilblock 1 vorgesehenen Einschnitte 4 verlaufen parallel zu den Querkanten 3 und damit auch parallel zueinander und sind zueinander und zu den Querkanten 3 zumindest im Wesentlichen gleich beabstandet. Die im Block 2 verlaufenden Einschnitte 5 haben einen zu den Querkanten 3 gegengewinkelten Verlauf und erstrecken sich parallel zueinander verlaufend unter einem Winkel β zu den Querkanten 3, welcher zwischen 25 ° und 45 ° beträgt. Der gegenseitige Abstand der Einschnitte 5 entspricht jenem der Einschnitte 4, wobei die Anzahl der Einschnitte 5 infolge ihrer gegengewinkelten Anordnung im Block 2 größer sein kann als die Anzahl der Einschnitte 4 im Block 1. Sowohl die Einschnitte 4 als auch die Einschnitte 5 sind mit Randanhebungen versehen, das heißt, sie weisen Randabschnitte 4a, 5a auf, die eine geringere Tiefe besitzen, als die mittleren Abschnitte 4b, 5b. In den Figuren 1 und 2 kennzeichnen die kurzen, die Einschnitte 4, 5 schneidenden Strichmarkierungen im Wesentlichen die Grenzen zwischen den seichten Randabschnitten 4a, 5a und den tiefen mittleren Abschnitten 4b, 5b. In den mittleren Abschnitten 4b, 5b weisen die Einschnitte 4, 5 beispielsweise eine Tiefe von 5 bis 8 mm auf, in den seitlichen Randabschnitten 4a, 5a beträgt die Tiefe zwischen 6 mm und 1mm. Die Übergänge zwischen den mittleren Abschnitten 4b, 5b und den jeweiligen Randabschnitten 4a, 5a werden üblicherweise gerundet ausgeführt. Die Randabschnitte 4a, 5a sind in sämtlichen Einschnitten 4, 5 vorzugsweise gleich lang.

Im Block 1 mit parallel zu den Querkanten 3 verlaufenden Einschnitten 4 ist der Anteil der tieferen mittleren Abschnitte 4b an der Gesamterstreckung sämtlicher Einschnitte 4 deutlich größer als bei den Einschnitten 5 im Block 2. Der Block 1 ist daher "weicher" als der Block 2, was für einen besseren Schneegriff sorgt, da sich die Einschnitte 4 auf Schnee zur Bildung von Griffkanten leichter öffnen können. Im Block 2 mit Einschnitten 5 ist der Anteil der äußeren Randabschnitte 5a gegenüber dem Anteil der tieferen mittleren Abschnitte 5b größer, der Block 2 ist wesentlich steifer und weist daher weniger gute Schneegriffeigenschaften als der Block 1 auf.

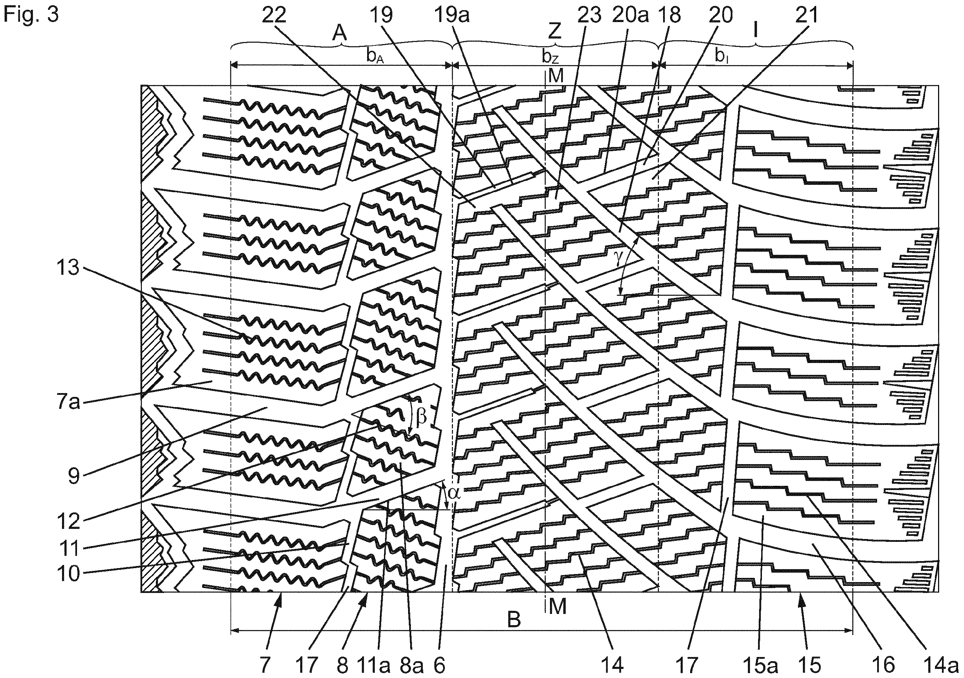

In Laufstreifen, die asymmetrisch gestaltet sind, können Blöcke 1, 2 infolge ihrer beschriebenen unterschiedlichen Eigenschaften besonders vorteilhaft eingesetzt werden. Reifen mit asymmetrisch gestalteten Laufstreifen weisen in ihrem im montierten Zustand der Fahrzeuglängsachse zugewandten Innenbereich Profilstrukturen auf, die sich von Profilstrukturen im Außenbereich unterscheiden. Bei asymmetrischen Laufstreifen werden üblicherweise die Profilstrukturen im Außenbereich hinsichtlich Trockenhandlingeigenschaften, jene im Innenbereich hinsichtlich Schneegriff optimiert. Für ein gutes Trockenhandling soll der Laufstreifen möglichst quer- und umfangssteif, für einen guten Schneegriff möglichst quer- und umfangsweich sein. Fig. 3 zeigt eine Ausführungsform eines Laufstreifens, welcher mit Profilblöcken bzw. Profilpositiven , die strukturell gemäß Fig. 1 und Fig. 2 gestaltet sind, versehen ist, um am Außenbereich jene Eigenschaften zur Verfügung zu stellen, die für ein gutes Trockenhandling erforderlich sind und um in der Mitte und am Innenbereich des Laufstreifens jene Eigenschaften zur Verfügung zu stellen, die für einen guten Schneegriff von Vorteil sind. Wie nun im Folgenden näher beschrieben wird, sind daher im Außenbereich des Laufstreifens Profilblöcke vorhanden, die zu den Querkanten gegengewinkelte Einschnitte besitzen, im mittleren Bereich des Laufstreifens und am Innenbereich sind Profilblöcke bzw. blockartige Profilpositive vorhanden, die Einschnitte aufweisen, die parallel zu Querkanten verlaufen.

In Fig. 3 sind mit B die Breite des Boden berührenden Teils des Laufstreifens - die Breite der Bodenaufstandsfläche - ermittelt gemäß den E.T.R.T.O. Standards - und mit M-M die mittlere Umfangslinie, der Reifenäquator, bezeichnet. Der Laufstreifen ist in einen Außenbereich A, welcher eine Breite b_{A} von 30 % bis 40 % der Breite B aufweist, einen mittleren Bereich Z, welcher eine Breite b_{Z} von 25 % bis 35 % der Breite B aufweist, und einen Innenbereich I, welcher eine Breite b_{I} von 25 % bis 35 % der Breite B aufweist, gegliedert. Im Außenbereich A verlaufen zwei Blockreihen 7, 8, wobei die schulterseitige Blockreihe 7 sich aus Blöcken 7a zusammensetzt, die durch im Wesentlichen in Querrichtung verlaufende Querrillen 9 voneinander getrennt sind. Eine Umfangsrille 10 trennt die Blockreihe 7 von der Blockreihe 8, an welche eine weitere Umfangsrille 6 angrenzt. Die Blöcke 8a der Blockreihe 8 sind im Wesentlichen parallelogrammförmig gestaltet, voneinander durch Schrägrillen 11 getrennt und besitzen daher Querkanten 11a, die unter dem oben erwähnten spitzen Winkel α zur Querrichtung verlaufen, welcher 15 ° bis 35 ° beträgt. Die Blöcke 8a sind mit einer Vielzahl von Einschnitten 12 versehen, die in Draufsicht einen im Wesentlichen zickzack- oder wellenförmigen Verlauf aufweisen und deren Erstreckungsrichtung zur Erstreckungsrichtung der Querkanten 11a gegengewinkelt ist. Die Einschnitte 12 erstrecken sich unter dem oben erwähnten Winkel β von 25 ° bis 45 zu den Querkanten 11a und sind, analog wie bei Fig. 1 und 2 beschrieben, mit seichten Randabschnitten und tiefen mittleren Abschnitten versehen. Die Blöcke 8a sind daher analog zu den Blöcken 2 ausgeführt. Die in den schulterseitigen Blockreihen 7 verlaufenden Blöcke 7a weisen ebenfalls Einschnitte 13 auf, die wellen- bzw. zickzackförmig verlaufend parallel zu den Querrillen 9 orientiert sind.

Im mittleren Bereich Z des Laufstreifens, welcher auch die mittlere Umfangslinie M-M umfasst, sowie im Innenbereich I des Laufstreifens sind Profilblöcke und/oder blockartige Profilpositive vorgesehen, deren Einschnitte 14, 14a parallel zu Querkanten verlaufen. Bei der gezeigten Ausführungsform weist der Innenbereich I eine schulterseitige Blockreihe 15 mit Blöcken 15a auf, die voneinander durch im Wesentlichen in Querrichtung verlaufende Querrillen 16 getrennt sind und jeweils mit einer Anzahl von parallel zu den Querrillen 16 verlaufenden Einschnitten 14a versehen sind. Von der an diese Blockreihe 15 angrenzenden Umfangsrille 17 ausgehend verlaufen Schrägrillen 18 bis über die Mittelumfangslinie M-M hinaus. Die Schrägrillen 18 sind leicht bogenförmig gekrümmt und schließen mit der Querrichtung einen Winkel γ von etwa 30 ° bis 45 ° ein. Gegensinnig zu den Schrägrillen 18 verlaufende weitere Schrägrillen 19 und 20 gliedern diesen Bereich des Laufstreifens in Profilblöcke 21 bzw. blockartige Profilpositive 22, 23. Die Schrägrillen 19, 20 verlaufen sämtlich im Wesentlichen parallel zueinander. Die blockartigen Profilpositive 22, 23 und die Profilblöcke 21 sind jeweils mit einer Vielzahl von Einschnitten 14 versehen, welche sämtlich - in allen blockartigen Profilpositiven 22, 23 und in den Profilblöcken 21 - parallel zueinander und parallel zu den Schrägrillen 19, 20 bzw. den von diesen Schrägrillen 19, 20 begrenzten Querkanten 19a, 20a der Profilblöcke 21 bzw. blockartigen Profilpositiven 22, 23 verlaufen. Die Einschnitte 14 besitzen seichte Randabschnitte und tiefe mittlere Abschnitte, analog zu den Einschnitten im Profilblock der Figur 1. In Draufsicht betrachtet verlaufen die Einschnitte 14, 14a in Wellen- bzw. Treppenform und unter im Wesentlichen gleich großen gegenseitigen Abständen, die den gegenseitigen Abständen der Einschnitte 12 im Außenbereich zumindest im Wesentlichen entsprechen. Die Einschnitte 14 sind gegenüber den Einschnitten 12 gegengewinkelt bzw. gegensinnig geneigt. Durch ihre parallele Anordnung zu den Schrägrillen 18, 19 weisen die Einschnitte 14 großteils eine relativ große Erstreckung auf.

Der Außenbereich A des Laufstreifens ist daher durch die Anordnung der Einschnitte 12 in den Profilblöcken 8a umfangs- und quersteifer als der Innenbereich I und der mittlere Bereich Z, wo durch die Anordnung der Einschnitte 14a, 14 für gute Schneegriffeigenschaften gesorgt ist.

### Bezugsziffernliste

- 1: Block
- 2: Block
- 3: Querkante
- 4: Einschnitt
- 4a: Randabschnitt
- 4b: mittlerer Abschnitt
- 5: Einschnitt
- 5a: Randabschnitt
- 5b: mittlerer Abschnitt
- 6: Umfangsrille
- 7: Blockreihe
- 7a: Block
- 8: Blockreihe
- 8a: Block
- 9: Querrille
- 10: Umfangsrille
- 11: Querrille
- 11a: Querkante
- 12: Einschnitt
- 13: Einschnitt
- 14: Einschnitt
- 14a: Einschnitt
- 15: Blockreihe
- 15a: Block
- 16: Querrille
- 17: Umfangsrille
- 18: Schrägrille
- 19: Schrägrille
- 19a: Querkante
- 20: Schrägrille
- 20a: Querkante

- 21: Profilblock
- 22: blockartiges Profilpositiv
- 23: blockartiges Profilpositiv
- I: Innenbereich
- M-M: Reifenäquator
- A: Außenbereich
- B: Breite der Bodenaufstandsfläche
- I: Innenbereich
- Z: mittlerer Bereich
- b_{A}, b_{I}, b_{Z}: Breite
- α: Winkel
- β: Winkel
- γ: Winkel

## Patentansprüche

1. Fahrzeugluftreifen, insbesondere für den Einsatz unter winterlichen Fahrbedingungen, mit einem Laufstreifen, welcher, auf das Fahrzeug bezogen, asymmetrisch ausgeführt ist und einen Außenbereich (A) und einen Innenbereich (I) sowie einen im Bereich der Reifenäquatorialebene (M-M) verlaufenden, mittleren Bereich (Z) aufweist, wobei der Laufstreifen in sämtlichen Teilbereichen Profilblöcke (7a, 8a, 15a, 21) und/oder blockartige Profilpositive (22, 23), die jeweils mit einer Vielzahl von Einschnitten (12, 13, 14, 14a) versehen sind, aufweist, welche seichte Randabschnitte und jeweils einen tiefen Mittelabschnitt aufweisen, wobei der Laufstreifen im Außen- und im Innenbereich (A, I) schulterseitig jeweils eine Blockreihe (7, 15) besitzt, wobei an die schulterseitige Blockreihe (7) im Außenbereich (A) eine Blockreihe (8) anschließt, deren Blöcke (8a) im Wesentlichen parallellogrammförmig gestaltet sind und von Querrillen (11) gebildete Querkanten (11a) aufweisen, die unter einem spitzen Winkel (α) von 15 ° bis 35 ° zur Querrichtung orientiert sind, wobei die Einschnitte (12) in den Profilblöcken (8a) dieser Blockreihe (8) zu den Querkanten (11a) gegengewinkelt verlaufen,
wobei an die schulterseitige Blockreihe (15) im Innenbereich (I) eine Umfangsrille (17) angrenzt, von welcher parallel zueinander bis über die Reifenäquatorialebene (M-M) verlaufende Schrägrillen (18) ausgehen,
**dadurch gekennzeichnet,**
**dass** im mittleren Bereich (Z) und im Innenbereich (I) Profilblöcke (21) und/oder blockartige Profilpositive (22, 23) angeordnet sind, die unter dem Winkel (α) von 15 ° bis zu 35 ° zur Querrichtung orientierte Querkanten (19a, 20a) aufweisen, zu welchen sich die in diesen Profilblöcken (21) und/oder blockartigen Profilpositiven (22, 23) verlaufenden Einschnitte (14) parallel erstrecken, wobei sich die Einschnitte (12) in den Profilblöcken (8a) der Blockreihe (8) im Außenbereich (A) unter einem Winkel (β) von 25 ° bis 45 ° zu den Querkanten (11a) erstrecken.

2. Fahrzeugluftreifen nach Anspruch 1, **dadurch gekennzeichnet, dass** die blockartigen Profilpositive (22, 23) und/oder die Profilblöcke (21) im Innenbereich (I) und im mittleren Bereich (Z) des Laufstreifens durch gegensinnig zueinander geneigt verlaufende Schrägrillen (18, 19, 20) gebildet sind.

3. Fahrzeugluftreifen nach Anspruch 1 oder 2, **dadurch gekennzeichnet, dass** der Außenbereich (A) eine Breite (b_{A}) aufweist, die 30 % bis 40 % der Breite (B) der Bodenaufstandsfläche beträgt.

## Claims

1. Pneumatic vehicle tyre, in particular for use under winter driving conditions, having a tread which, in relation to the vehicle, is of asymmetrical design and has an outer region (A) and an inner region (I) and a middle region (Z) running in the region of the tyre equatorial plane (M-M), wherein the tread has, in all subregions, profile blocks (7a, 8a, 15a, 21) and/or block-like profile positives (22, 23), which are each equipped with a multiplicity of sipes (12, 13, 14, 14a) which have shallow edge portions and in each case one deep middle portion, wherein the tread has, in the outer and in the inner region (A, I), in each case one block row (7, 15) at the shoulder side, wherein the shoulder-side block row (7) is adjoined in the outer region (A) by a block row (8) whose blocks (8a) are of substantially parallelogram-shaped design and have transverse edges (11a) formed by transverse channels (11), which transverse edges are oriented at an acute angle (α) of 15° to 35° with respect to the transverse direction, wherein the sipes (12) in the profile blocks (8a) of said block row (8) run so as to be angled oppositely in relation to the transverse edges (11a),
wherein the shoulder-side block row (15) is adjoined in the inner region (I) by a circumferential channel (17), from which there extend oblique channels (18) which run parallel to one another as far as across the tyre equatorial plane (M-M),
**characterized**
**in that**, in the middle region (Z) and in the inner region (I), there are arranged profile blocks (21) and/or block-like profile positives (22, 23) which have transverse edges (19a, 20a) oriented at the angle (α) of 15° to up to 35° with respect to the transverse direction, parallel to which transverse edges the sipes (14) which run in said profile blocks (21) and/or block-like profile positives (22, 23) extend, wherein the sipes (12) in the profile blocks (8a) of the block row (8) in the outer region (A) extend at an angle (β) of 25° to 45° with respect to the transverse edges (11a).

2. Pneumatic vehicle tyre according to Claim 1, **characterized in that** the block-like profile positives (22, 23) and/or the profile blocks (21) in the inner region (I) and in the middle region (Z) of the tread are formed by oblique channels (18, 19, 20) which run so as to be inclined oppositely to one another.

3. Pneumatic vehicle tyre according to Claim 1 or 2, **characterized in that** the outer region (A) has a width (b_{A}) which amounts to 30% to 40% of the width (B) of the ground contact patch.

## Revendications

1. Pneumatique de véhicule, destiné en particulier à être utilisé dans des conditions de circulation hivernales, avec une bande de roulement qui, par rapport au véhicule, est réalisée de façon asymétrique et qui présente une zone extérieure (A) et une zone intérieure (I) ainsi qu'une zone intermédiaire (Z) s'étendant dans la région du plan équatorial du pneumatique (M-M), dans lequel la bande de roulement présente dans toutes les zones partielles des blocs profilés (7a, 8a, 15a, 21) et/ou des éléments positifs profilés de type bloc (22, 23), qui sont respectivement dotés d'une multiplicité d'entailles (12, 13, 14, 14a), qui présentent des parties de bord peu profondes et chaque fois une partie centrale profonde, dans lequel la bande de roulement possède dans la zone extérieure et intérieure (A, I) respectivement une rangée de blocs (7, 15) côté épaule, dans lequel une rangée de blocs (8) se raccorde dans la zone extérieure (A) à la rangée de blocs côté épaule (7) et dont les blocs (8a) sont réalisés essentiellement en forme de parallélogramme et présentent des arêtes transversales (11a) formées par des rainures transversales (11), qui sont orientées sous un angle aigu (α) de 15° à 35° par rapport à la direction transversale, dans lequel les entailles (12) dans les blocs profilés (8a) de cette rangée de blocs (8) sont inclinées en sens contraire par rapport aux arêtes transversales (11a),
dans lequel une rainure périphérique (17) jouxte la rangée de blocs côté épaule (15) dans la zone intérieure (I), de laquelle partent des rainures obliques (18) qui s'étendent parallèlement l'une à l'autre jusqu'au-delà du plan équatorial du pneumatique (M-M),
**caractérisé en ce que** des blocs profilés (21) et/ou des éléments positifs profilés de type bloc (22, 23) sont disposés dans la zone intermédiaire (Z) et dans la zone intérieure (I), qui présentent des arêtes transversales (19a, 20a) orientées sous l'angle (α) de 15° à 35° par rapport à la direction transversale, auxquelles les entailles (14) s'étendant dans ces blocs profilés (21) et/ou dans ces éléments positifs profilés de type bloc (22, 23) s'étendent parallèlement, dans lequel les entailles (12) dans les blocs profilés (8a) de la rangée de blocs (8) s'étendent dans la zone extérieure (A) sous un angle (β) de 25° à 45° par rapport aux arêtes transversales (11a).

2. Pneumatique de véhicule selon la revendication 1, **caractérisé en ce que** les éléments positifs profilés de type bloc (22, 23) et/ou les blocs profilés (21) dans la zone intérieure (I) et dans la zone intermédiaire (Z) de la bande de roulement sont formés par des rainures obliques (18, 19, 20) inclinées en sens contraire l'une par rapport à l'autre.

3. Pneumatique de véhicule selon la revendication 1 ou 2, **caractérisé en ce que** la zone extérieure (A) présente une largeur (b_{A}), qui vaut 30 % à 40 % de la largeur (B) de la surface d'appui au sol.
